# EUROPEAN PATENT SPECIFICATION

(11) **EP 3 480 908 B1**
(45) Date of publication and mention of the grant of the patent: **20.01.2021**
(21) Application number: 17769112.8
(22) Date of filing: 27.06.2017
(51) Int. Cl.: H02G 3/18

(54) **ASSEMBLY FOR FLUSH-MOUNTED MECHANISMS WHICH COMPRISES A FRAME AND CONNECTION BASE AND METHOD FOR COUPLING SAID ASSEMBLY**
ANORDNUNG FÜR BÜNDIG MONTIERTEN MECHANISMUS MIT EINEM RAHMEN UND EINER VERBINDUNGSBASIS UND VERFAHREN ZUM VERBINDEN DIESER ANORDNUNG
ENSEMBLE BÂTI ET BASE DE CONNEXION POUR MÉCANISMES À ENCASTRER ET PROCÉDÉ D'ACCOUPLEMENT DE CET ENSEMBLE

(30) Priority: 04.07.2016 ES 201630911
(43) Date of publication of application: 08.05.2019
(73) Proprietor: Simon, S.A.U., 08013 Barcelona (ES)
(72) Inventor: ACIEN FERNANDÉZ, Jonatan, 08013 Barcelona (ES)
(74) Representative: Balder IP Law, S.L.
(86) International application number: PCT/ES2017/070465
(87) International publication number: WO 2018/007663

(56) References cited:
- EP-A1- 2 690 730
- DE-A1- 2 408 676
- ES-U- 1 133 990

## Description

### Field of the invention

The present invention falls within the field of flush mounting mechanisms, specifically of the type intended to be flush mounted in walls. More specifically, it relates to a frame and connection base assembly for flush mounting mechanisms that allow for carrying out a more comfortable and reliable coupling method between both.

### Background of the invention

Frame and connection base assemblies are widely known for flush mounting mechanisms such as outlets, switches, dimmers, cable outlets, blind controllers, TV RJ, HDMI and USB sockets, bus couplers, etc.

The frame is a metallic plate provided with holes for fastening to a flush mounted box and an opening for the introduction and fitting of the connection base. The connection base is the component in which there are incorporated at least one electrical mechanism and some connection terminals to cables that reach the flush mounted box. For example, in an outlet, the connection base is the component in which are incorporated the housing for the male plug, the pin-holes for the pins and, in a second portion that can be called the lower one, the connection terminals of the cables that reach the flush mounted box.

In these assemblies, the opening is delimited by a guide and fitting perimeter of the connection base. In other words, from a certain moment during the coupling process, by means of complementary shapes, obviously with a certain gap, the connection base is guided by an inner edge of the frame, a process which ends with the locking between both portions, for example by means of a clipping between elastic legs and notches complementary to them, generally arranged in the connection base and in the frame, respectively.

The connection base usually has a support framework in the frame, which acts as a stop in order to stabilize the assembly in the coupling configuration. The connection base also comprises a connection body joined to the framework, which is where the elements that carry out the electrical connection are housed, specifically the pin-holes and the terminals.

Therefore, the assembly allows for defining a first configuration in which the frame and the connection base are uncoupled and a second configuration in which the frame and the connection base are coupled.

In the second configuration, the framework abuts on the frame on one side thereof and the connection body is introduced into the opening and protrudes out from the other side of the frame. Said in other words, in the framework of the connection base two surfaces are defined, an outer one that will be oriented towards the outside once the assembly is coupled, and an inner one oriented towards the outer surface of the frame, such that when the frame and the base are coupled, the inner surface of the framework of the connection base and the outer surface of the frame are adjoining.

In going from the first configuration to the second configuration, there is a first phase of the introduction of the connection base in the opening of the frame. During this phase, the enabled movement of the connection base with respect to the frame is of six degrees of freedom, in other words, three of translation and three of rotation. This first phase ends with the correct fitting of the connection base in the frame, such that they are fitted to each other in order to enable a guide until the second configuration, which is that of coupling, and in which only one degree of freedom is enabled.

Previous to this coupling process, obviously, the installer will have connected the cables that come out of the flush mounted box in terminals arranged in the bottom of the connection base, connection which is usually made by means of quick connection levers that cooperate with insulate-displacement connectors. Once the connections are made, the connection base is brought closer to the frame while simultaneously arranging the cables inside the flush mounted box so they do not interfere, or barely do, with the connection base, for which reason the installer must be particularly attentive in that approach phase.

The problem that arises is that once the connection base begins to be introduced into the opening of the frame, the installer starts to move the connection base with respect to the frame according to the six degrees of freedom indicated, when the connection base is further introduced into the frame and while he tries to find the position in which the connection base and the frame coincide, in order to make one last push in the introduction direction in order to proceed to the final clipping. The tentative movements during this phase of searching for the fitting between the portions of the assembly implies movements that can cause the previously organized cables in the box to become disorganized and leave their intended position. It can also occur that some portions of the frame and of the connection base get hooked and further hinder the introduction, or it could cause jamming of the connection base in the frame and a forced movement to free it could crack or break one of the portions.

DE2408676A1 discloses an electrical installation box having a body comprising two parts with different sections such that in the transition between both of them bearing surfaces are defined.

### Description of the invention

In order to overcome the mentioned disadvantages, an assembly of frame and connection base for flush mounting mechanisms is proposed herein, in which the frame comprises at least one opening for the introduction and fitting of the connection base, the opening being delimited by a guide and fitting perimeter of the connection base, in which the connection base comprises a connection body, a first configuration being defined in which the frame and the connection base are uncoupled and a second configuration in which the frame and the connection base are coupled, such that in the second configuration the connection body is introduced in the opening, the outline of the connection body at one of its ends being in contact with the guide and fitting perimeter, the rest of the connection body protruding by its other end from the other side of the frame, and in which the connection body has two portions, a first portion that in the second configuration is fastened to the guiding and fitting perimeter by one of its ends and a second portion joined to the first portion, both first and second portions being of different sections such that in the transition between both of them bearing surfaces are defined, such that in a third configuration these bearing surfaces rest on the edge of the frame adjacent to its guiding and fitting perimeter, the outline of the second portion of the connection body in the section change between the first and second portions being inscribed in a first circle that is internally tangent to the guiding and fitting perimeter, such that in the third configuration the connection base can rotate with respect to the frame according to a rotation that has the direction normal to the plane of the frame.

This structure largely resolves the disadvantages of the state of the art, since first of all it allows for dividing the coupling method into several phases, all of which are very comfortable for the user and in which it reduces the possibility of making undesired movements that lead to the previously explained situations.

Specifically, this structure allows for dividing the coupling into a first approaching phase in which a portion of the connection base with a smaller cross section is introduced into the opening of the frame, and due to the difference in outlines, it does not have any impediments in the introduction. Next, upon reaching the transition area between the first and second portions two things can occur, either it is already in a relative position that allows for correct guiding between frame and connection base, which only occurs in very defined positions, and in which case the coupling is very easy, or that contact may be produced between the aforementioned bearing surfaces and the edge of the frame on its outer surface, which will most likely occur. In this second case, the contact in the edge of the frame impedes the installer to go on carrying out random tentative movements of the connection base with respect to the frame, but instead the connection base is forced to have its upper surface parallel to the frame, and therefore the main possible movement from this moment on is the rotation of the connection base with respect to the frame. This rotating movement is made with a certain gap and it is not necessary that the tolerances be very tight to do so. Then the installer will rotate the connection base until it reaches a position in which the introduction of the connection base in the direction normal to the surface of the frame is made possible, for the subsequent final coupling of the assembly.

Therefore, the characteristics of the invention allow for structuring the coupling maneuver to impede the creation of locking positions, and so that the minimum guide necessary to achieve coupling is guaranteed. In this way, movements that lead to a defective mounting are eliminated.

In some embodiments, the connection base further comprises a framework that is located connected to the connection body, specifically the framework is located connected to the first portion of the connection body, this framework in the second configuration abuts the frame on one of its sides (in other words they are adjoining) while the connection body is introduced through the opening of the frame and protrudes through the other side of the frame. In the third configuration, the surface of the framework of the connection base stays parallel to the surface of the frame while a rotation is made for the transition to the second configuration.

In some embodiments, the first portion of the connection body has an outer surface, this outer surface and the guiding and fitting perimeter being provided with guide means between them according to a coupling direction that is perpendicular to the plane of the frame.

In some embodiments, the outer surface of the first portion of the connection body comprises ridges that have the coupling direction, the guiding and fitting perimeter being provided with notches complementary to the ridges.

In some embodiments, the second portion of the connection body is provided with connection terminals for the connection of cables.

In some embodiments, the outline of the second portion of the connection body in the section change between the first and second portions of the connection body comprises at least two points arranged in a second circle with a radius smaller than the circle internally tangent to the guiding and fitting perimeter, the outline of the first portion of the connection body being tangent to a third circle with a radius larger than the circle internally tangent to the guiding and fitting perimeter, the difference between the radii of the third circle and the circle internally tangent to the guiding and fitting perimeter being larger than the difference between the radii of the second circle and the circle internally tangent to the guiding and fitting perimeter.

These geometric characteristics allow on one hand the rotation between the portions of the assembly and on the other hand prevent the loss of the correct contact between connection base and frame.

In some embodiments, the assembly comprises locking means of the connection base in the frame in the second configuration.

In some embodiments, the locking means comprise elastic legs in the first portion of the connection body and notches in the guiding and fitting perimeter for the fitting of the end of the elastic legs.

In some embodiments, the frame has a housing recess of the framework of the connection base.

In some embodiments, the frame is square or rectangular and the second portion of the connection body is a body with an oblong cross section, its larger side being arranged obliquely with respect to the sides of the frame in the second configuration.

In some embodiments, the guide means have an angular frequency of 90°, such that four angular positions are defined relative to the coupling between the frame and the connection base.

In some embodiments, the first portion comprises a cavity for receiving the body of a male plug while the second portion comprises a plurality of quick connection levers. Thus, the first and second portions have distinct functions and as is habitual, it has to do with two portions differentiated with distinct functions, which can be manufactured separately and joined later, as is shown for example in the document published with number ES 1 133 990 U.

In some embodiments, the frame comprises a plurality of openings and the corresponding connection bases.

The invention also relates to a coupling method of an assembly according to any of the disclosed variations, which sequentially comprises the phases of:
a) introducing the second portion of the connection base in the opening which bring the assembly from the first configuration to the third configuration;
b) rotating the connection base with respect to the frame to a position in which the guide means of the outer surface of the connection base and the guiding and fitting perimeter coincide;
c) relative sliding between the connection base and the frame to bring the assembly to the second configuration;
d) locking the assembly in the second configuration.

### Brief description of the drawings

As a complement to the description, and for the purpose of helping to make the characteristics of the invention more readily understandable, in accordance with a practical embodiment thereof, said description is accompanied by a set of figures constituting an integral part thereof, which by way of illustration and not limitation represent the following:
Figure 1 is a perspective view from above of a frame and plug connection base assembly in a decoupled configuration prior to coupling.
Figure 2 shows the assembly of figure 1 in the third configuration, in other words that in which the connection base can move with respect to the frame according to a rotation that has the direction normal to the frame.
Figure 3 shows the second configuration, in which the frame and the connection base are coupled.
Figure 4 is an elevation view of the frame, in which it can be seen that it is a substantially flat body.
Figure 5 is an elevation view of the connection base.
Figure 6 shows a cross section of the assembly in the third configuration.
Figure 7 shows a perspective view with the assembly inverted in the second configuration, in which only the second portion protrudes from the frame on the side corresponding to the flush mounted box.
Figure 8 is a plan view of the assembly in the third configuration, in which the connection base can be turned with respect to the frame until reaching a configuration that enables the final introduction of the connection base in the frame which leads to the second configuration.
Figure 9 is a plan view of the frame that enables seeing an embodiment of its guiding and fitting perimeter that enables the relative turning between frame and connection base, and in which the guide and locking notches of the guiding and fitting perimeter of the frame are seen.

### Description of an embodiment of the invention

As can be seen in the figures, the invention relates to a frame 1 and connection base 2 assembly for flush mounting mechanisms. In a preferred embodiment, the flush mounting mechanism is a plug. In the figures, a preferred embodiment is shown in which the flush mounting mechanism is a plug, only the components of the claimed assembly being shown, neither the flush mounted box nor the cables, the trims or the male plug being shown.

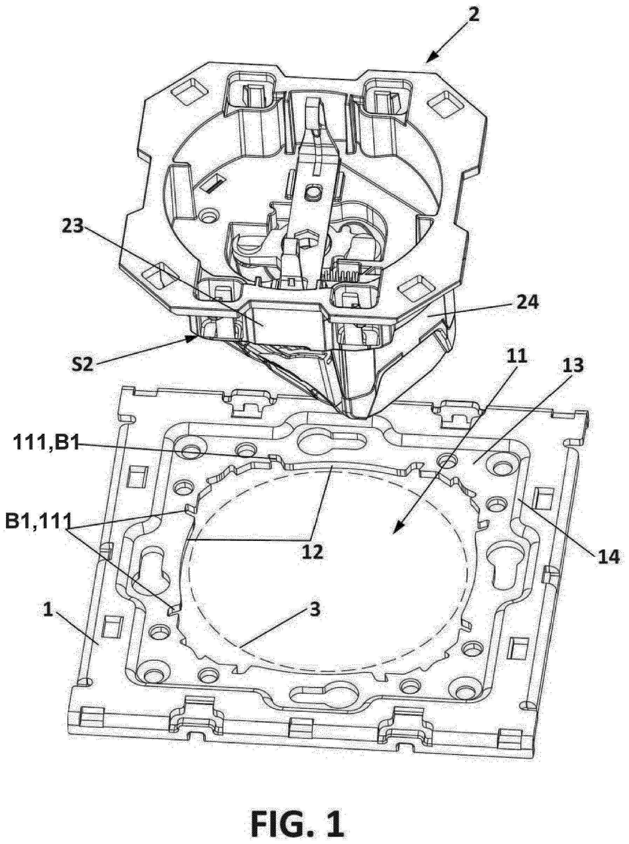

As can be seen in figure 1, the frame 1 comprises an opening 11 for the introduction and fitting of the connection base 2. In the illustrated embodiment only one assembly has been shown in which the frame (1) has only one opening 11, and therefore only one connection base 2 is coupled to it. Obviously, a frame 1 can be cut provided with a plurality of openings intended for the fastening of the corresponding connection bases 2.

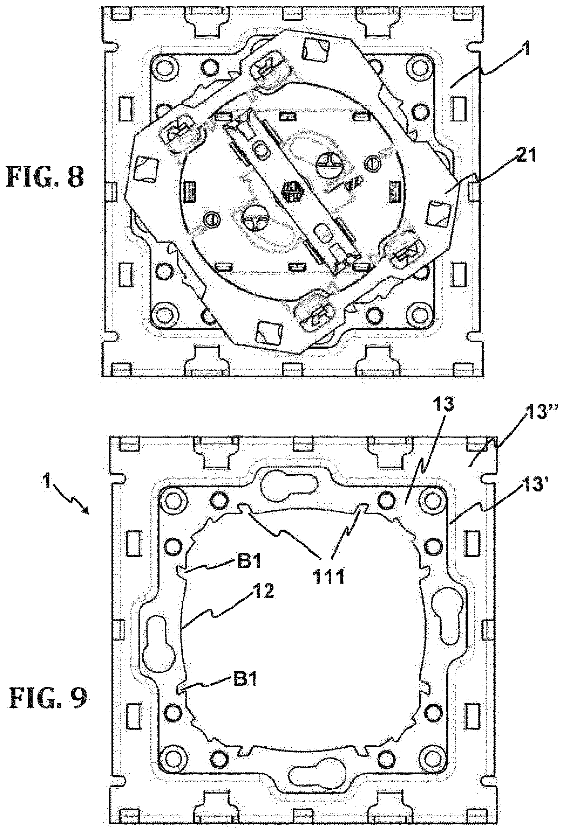

The opening, as seen in figures 1 and 9, is delimited by a guiding and fitting perimeter 12 of the connection base 2.

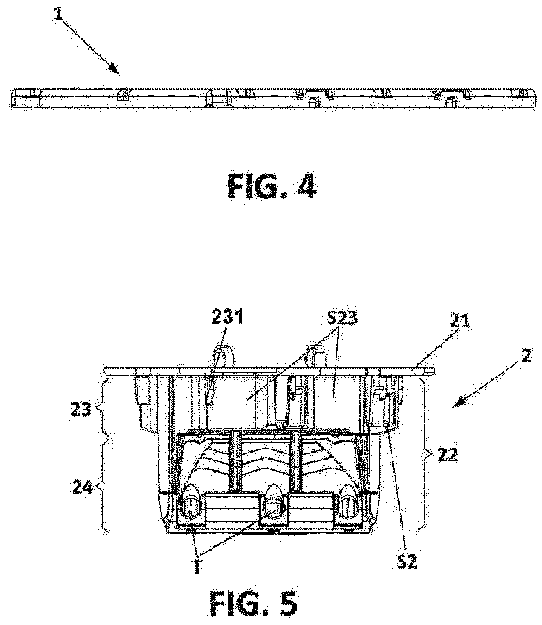

As seen in the elevation view of figure 5, the connection base 2 comprises a support framework 21 in the frame 1 and a connection body 22 joined to the framework 21.

It is notable that in the described embodiment the connection base has a stop framework 21 of fastening of the connection base 2 to the frame 1. However, this framework 21 is not always necessary, since a person skilled in the art can conceive other embodiments in which the contact stop is carried out in other ways, such as for example a projection or even by means of the locking and fastening means themselves.

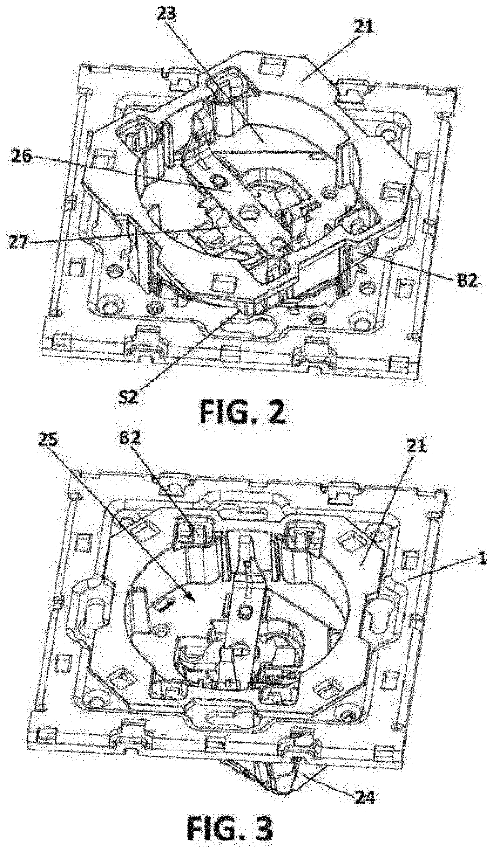

Therefore, a first configuration is defined, shown in figure 1, in which the frame 1 and the connection base 2 are uncoupled and a second configuration, shown in figure 3, in which the frame 1 and the connection base 2 are coupled.

In the second configuration, as seen in figure 3, the framework 21 abuts the frame 1 on one side of it, in other words that they are adjoining, and the connection body 22 is introduced in the opening 11 and protrudes from the other side of the frame 1.

According to the present invention as seen in figure 5, the connection body 22 is divided into two portions 23, 24.

A first portion 23 of the connection body is joined to the framework 21, and is the one that has the cavity 25 for receiving the body of a male plug (not shown) and in which the neutral fork 26 and the pin-hole protection device 27 are fastened, as indicated in figure 2.

The second portion 24 is joined to the first portion 23 on the side opposite to the fastening framework 21.

The first 23 and second 24 portions have different cross sections such that in the transition between both of them bearing surfaces S2 are defined.

The transition should be such that in a third configuration, shown in figures 2, 6 and 8, these bearing surfaces S2 rest on the edge of the frame that is adjacent to the guiding and fitting perimeter 12, on the outer surface, with the outline of the second portion 24 in the section change between the first 23 and second 24 portions inscribed in the first circle 3 that is internally tangent to the guiding and fitting perimeter 12.

Therefore, in the third configuration the connection base 2 can rotate with respect to the frame 1 according to a rotation that has the direction normal to the plane of the frame 1.

In this text, the concepts of perimeter and edge must be distinguished. Perimeter should be understood as the surface or inner edge of the frame that is facing the outer surface of the first portion of the base. It relates to surfaces that contain the direction of introduction. In contrast, the edge is contained in a surface perpendicular to this perimeter. Therefore, the perimeter is that which makes it possible to limit the movement of the base with respect to the frame and according to movements with direction contained in the plane of the frame in the third configuration, while the edge is that which impedes the movement according to the direction normal to the frame, in other words the direction of introduction.

As it is known, the first portion 23 has an outer surface S23, this outer surface S23 and the guiding and fitting perimeter 12 being provided with guide means between them according to a coupling direction that is perpendicular to the plane of the frame 1. Moreover, according to the present invention, these guide means only actuate once the bearing surfaces are introduced in the opening of the frame, the frame and connection base assembly staying in the relative position suitable for their coupling, after the relative rotation between connection base 2 and frame 1, and being followed by the introduction according to the direction normal to the plane of the frame 1 which brings the assembly from the third configuration to the second configuration.

As seen in figure 5, these guide means consist of the outer surface S23 comprising ridges 231 that have the coupling direction, the guiding and fitting perimeter 12 being provided with notches 111 complementary to the ridges.

As seen in figure 5, the second portion 24 is provided with connection terminals T for connecting cables.

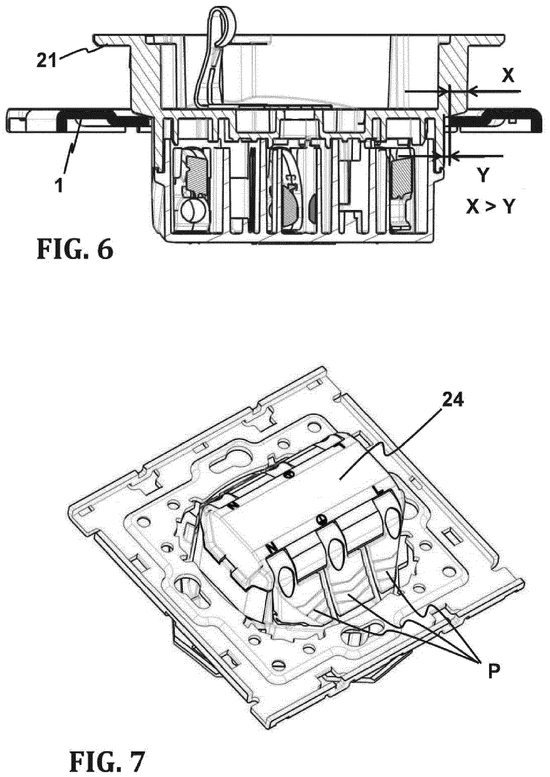

According to an especially preferred embodiment, and as can be seen in the cross section of figure 6, the outline of the second portion 24 in the section change between the first 23 and second 24 portions comprises at least two points arranged in a second circle with a radius smaller than the circle 3 internally tangent to the guiding and fitting perimeter 12, the outline of the first portion 23 being tangent to a third circle with a radius larger than the circle 3 internally tangent to the guiding and fitting perimeter 12, the difference X between the radii of the third circle and the circle 3 internally tangent to the guiding and fitting perimeter 12 being larger than the difference Y between the radii of the circle 3 internally tangent to the guiding and fitting perimeter 12 and the second circle. This relationship between the radii is illustrated in figure 6.

It must be noted that the rotating contact of the connection base 2 in the frame at the level of the transition can be made in many ways. What is essential is achieving enough contact between the connection base 2 and the frame 1 that enables the connection base 2 to rotate with respect to the frame 1 until it reaches the position of coinciding guides. The contact can be made by means of two, three or more points or areas conveniently arranged for an effective contact.

Also, as can be seen in figures 1 and 2, locking means are anticipated of the connection base 2 in the frame 1 (in the second configuration) consisting of elastic legs B2 in the first portion 23 and notches B1 in the guiding and fitting perimeter 12 for the fitting of the end of the elastic legs B2.

As can be seen in figure 9, the frame 1 has a housing recess 13 of the framework 21 of the connection base 2. Therefore, a step 13' is defined between a more elevated surface 13" of the frame 1, and the recess 13.

As seen in figure 3 or in figure 7, the frame 1 is square or rectangular and the second portion 24 is a body with an oblong cross section, its larger side being arranged obliquely with respect to the sides of the frame 1 in the second configuration. This arrangement is already known on its own, as described for example in the aforementioned publication ES 1 133 990.

According to the present embodiment, and as seen in the plan view in figure 9, the guide means have an angular frequency of 90°, such that four angular positions are defined relative to the coupling between the frame 1 and the connection base 2. Thus, the installer will always need to make a rotation of less than 90° in order to reach a fitting position. To do so, guide means and the fastening legs will be made to coincide in two consecutive sides of the connection base 2.

As seen in figures 1 and 9, the notches B1 and 111 have the same shape. In a complementary way, the elastic legs B2 and the ridges 231 protrude from the portion 23 with the same shape complementary to the notches B1, 111, and they are arranged symmetrically, such that the elastic legs B2 as well as the ridges 231 fit in the notches B1, 111.

As seen in figure 7, the second portion 24 comprises a plurality of quick connection levers P.

In all of the embodiments, it is preferred that the frame 1 be made of steel and that the connection base 2 be made of polyamide.

The described assembly coupling method will be carried out by means of the phases of:
a) introducing the second portion 24 in the opening 11 which brings the assembly from the first configuration to the third configuration;
b) rotating the connection base 2 with respect to the frame 1 to a position in which the guide means of the outer surface S23 and the guiding and fitting perimeter 12 coincide;
c) relative sliding between the connection base 2 and the frame 1 to bring the assembly to the second configuration.
d) locking the assembly in the second configuration.

In this text, the word "comprises" and its variants such as "comprising", etc. should not be understood in an exclusive sense, i.e. they do not exclude the possibility of that which is described including other elements, steps, etc.

Also, the invention is not limited to the specific embodiments described herein, but rather encompasses the variations that one skilled in the art could make (e.g. in terms of choice of materials, dimensions, components, design, etc.), within the scope of what may be deduced from the claims.

## Claims

1. A frame (1) and connection base (2) assembly for flush mounting mechanisms, wherein the frame (1) comprises at least one opening (11) for the introduction and the fitting of the connection base (2), the opening (11) being delimited by a perimeter of the frame (1) for guiding and fitting the connection base (2), in which the connection base (2) comprises a connection body (22), a first configuration being defined in which the frame (1) and the connection base (2) are uncoupled and a second configuration in which the frame (1) and the connection base (2) are coupled, such that in the second configuration the connection body (22) is introduced in the opening (11), the outline of the connection body (22) at one of its ends being in contact with the guiding and fitting perimeter (12), the rest of the connection body (22) protruding by its other end from the other side of the frame (1), and in which the connection body (22) has two portions, a first portion (23) that in the second configuration is fastened to the guiding and fitting perimeter (12) by one of its ends and a second portion (24) joined to the first portion (23), both first (23) and second (24) portions being of different sections such that in the transition between both of them bearing surfaces (S2) are defined, **characterized in that** in a third configuration these bearing surfaces (S2) rest on the edge of the frame adjacent to the guiding and fitting perimeter (12), the outline of the second portion (24) in the section change between the first (23) and second (24) portions being inscribed in a first circle (3) that is internally tangent to the guiding and fitting perimeter (12), such that in the third configuration the connection base (2) can rotate with respect to the frame (1) according to a rotation that has the direction normal to the plane of the frame (1).

2. The assembly according to claim 1, wherein the connection base (2) comprises a support framework (21) in the frame (1) joined to the connection body (22), such that in the second configuration the framework (21) abuts the frame (1) on one side of it, the first portion (23) being joined to the framework (21).

3. The assembly according to any of the preceding claims, wherein the first portion (23) of the connection body (22) has an outer surface (S23), this outer surface (S23) and the guiding and fitting perimeter (12) being provided with guide means between them according to a coupling direction that is perpendicular to the plane of the frame (1).

4. The assembly according to claim 3, wherein the outer surface (S23) of the first portion of the connection body comprises ridges (231) that have the coupling direction, the guiding and fitting perimeter (12) being provided with notches (111) complementary to the ridges.

5. The assembly according to any of the preceding claims, wherein the second portion (24) of the connection body is provided with connection terminals (T) for the connection of some cables.

6. The assembly according to any of the preceding claims, wherein the outline of the second portion (24) of the connection body in the section change between the first (23) and second (24) portions of the connection body comprises at least two points arranged in a second circle with a radius smaller than the circle (3) internally tangent to the guiding and fitting perimeter (12), the outline of the first portion (23) of the connection body being tangent to a third circle with a radius larger than the circle (3) internally tangent to the guiding and fitting perimeter (12), the difference (X) between the radii of the third circle and circle internally tangent to the guiding and fitting perimeter being larger than the difference (Y) between the radii of the second circle and the circle internally tangent to the guiding and fitting perimeter.

7. The assembly according to any of the preceding claims, comprising locking means of the connection base (2) in the frame (1) in the second configuration.

8. The assembly according to claim 7, wherein the locking means comprise elastic legs (B2) in the first portion (23) of the connection body and notches (B1) in the guiding and fitting perimeter (12) for the fitting of the ends of the elastic legs (B2).

9. The assembly according to any of the preceding claims, wherein the frame (1) has a housing recess (13) of the framework (21) of the connection base (2).

10. The assembly according to any of the preceding claims, wherein the frame (1) is square or rectangular and the second portion (24) is a body with an oblong cross section, its larger side being arranged obliquely with respect to the sides of the frame (1) in the second configuration.

11. The assembly according to claim 3, wherein the guide means have an angular frequency of 90°, such that four angular positions are defined relative to the coupling between the frame (1) and the connection base (2).

12. The assembly according to any of the preceding claims, wherein the first portion (23) comprises a cavity (25) for receiving the body of a male plug.

13. The assembly according to any of the preceding claims, wherein the frame (1) comprises a plurality of openings (11) and the corresponding connection bases (2).

14. The assembly according to any of the preceding claims, wherein the second portion (24) comprises a plurality of quick connection levers (P).

15. Coupling method for an assembly according to claim 3, sequentially comprising the phases of:
a) introducing the second portion (24) of the connection base in the opening (11) which bring the assembly from the first configuration to the third configuration;
b) rotating the connection base (2) with respect to the frame (1) to a position in which the guide means of the outer surface (S23) of the connection base and the guiding and fitting perimeter (12) coincide;
c) relative sliding between the connection base (2) and the frame (1) to bring the assembly to the second configuration.
d) locking the assembly in the second configuration.

## Patentansprüche

1. Eine Anordnung mit einem Rahmen (1) und einer Verbindungsbasis (2) zum bündigen Montieren von Mechanismen, wobei der Rahmen (1) zumindest eine Öffnung (11) für die Einführung und das Einpassen der Verbindungsbasis (2) aufweist, wobei die Öffnung (11) von einem Umriss des Rahmens (1) begrenzt ist zum Führen und Einpassen der Verbindungsbasis (2), und wobei die Verbindungsbasis (2) einen Verbindungskorpus (22) aufweist, und wobei eine erste Konfiguration, in der der Rahmen (1) und die Verbindungsbasis (2) nicht miteinander gekoppelt sind, und eine zweite Konfiguration, in der der Rahmen (1) und die Verbindungsbasis (2) miteinander gekoppelt sind, festgelegt sind, derart, dass in der zweiten Konfiguration der Verbindungskorpus (22) in die Öffnung (11) eingeführt ist, und wobei eine Kontur des Verbindungskorpus (22) an einem seiner Enden in Kontakt mit dem Führungs- und Einpassumriss (12) steht, und wobei an seinem anderen Ende der Verbindungskorpus (22) von der anderen Seite des Rahmens (1) übersteht, und wobei der Verbindungskorpus (22) zwei Abschnitte besitzt, und wobei ein erster Abschnitt (23) in der zweiten Konfiguration an einem seiner Enden an dem Führungs- und Einpassumriss (12) angebracht ist und ein zweiter Abschnitt (24) mit dem ersten Abschnitt (23) verbunden ist, und wobei sowohl der erste (23) als auch der zweite (24) Abschnitt unterschiedliche Bereiche darstellen, derart, dass Lageroberflächen (S2) in dem Übergang zwischen beiden festgelegt sind, **dadurch gekennzeichnet, dass** in einer dritten Konfiguration diese Lageroberflächen (S2) auf dem Rand des Rahmens benachbart dem Führungs- und Einpassumriss (12) aufliegen, und dass die Kontur des zweiten Abschnitts (24) in dem Bereichsübergang zwischen dem ersten (23) und dem zweiten (24) Abschnitt in einem ersten Kreis (3) eingeschrieben ist, der intern tangential zu dem Führungs- und Einpassumriss (12) ist, so dass in der dritten Konfiguration die Verbindungsbasis (2) in Bezug auf den Rahmen (1) gedreht werden kann gemäß einer Drehung, die in Richtung senkrecht zu der Ebene des Rahmens (1) erfolgt.

2. Die Anordnung nach Anspruch 1, wobei die Verbindungsbasis (2) eine Trägerrahmenstruktur (21) in dem Rahmen (1) aufweist, die mit dem Verbindungskorpus (22) verbunden ist, derart, dass in der zweiten Konfiguration die Rahmenstruktur (21) an einer Seite an den Rahmen (1) anstößt, und wobei der erste Abschnitt (23) mit der Rahmenstruktur (21) verbunden ist.

3. Die Anordnung nach einem der vorhergehenden Ansprüche, wobei der erste Abschnitt (23) des Verbindungskorpus (22) eine äußere Oberfläche (S23) besitzt, und wobei die äußere Oberfläche (S23) und der Führungs- und Einpassumriss (12) mit Führungsmitteln dazwischen gemäß einer Kopplungsrichtung, die senkrecht zu der Ebene des Rahmens (1) ist, versehen sind.

4. Die Anordnung nach Anspruch 3, wobei die äußere Oberfläche (S23) des ersten Abschnitts des Verbindungskorpus Rippen (231) aufweist, welche die Kopplungsrichtung vorgeben, und wobei der Führungs- und Einpassumriss (12) mit Kerben (111) versehen ist, die komplementär zu den Rippen sind.

5. Die Anordnung nach einem der vorhergehenden Ansprüche, wobei der zweite Abschnitt (24) des Verbindungskorpus mit Verbindungsanschlüssen (T) für die Verbindung von Kabeln versehen ist.

6. Die Anordnung nach einem der vorhergehenden Ansprüche, wobei die Kontur des zweiten Abschnitts (24) des Verbindungskorpus in dem Bereichsübergang zwischen dem ersten (23) und dem zweiten (24) Abschnitt des Verbindungskorpus zumindest zwei Punkte aufweist, die in einem zweiten Kreis mit einem Radius angeordnet sind, der kleiner als der Kreis (3) ist, welcher intern tangential zu dem Führungs- und Einpassumriss (12) verläuft, und wobei die Kontur des ersten Abschnitts (23) des Verbindungskorpus tangential zu einem dritten Kreis mit einem Radius verläuft, der größer als der Kreis (3) ist, welcher intern tangential zu dem Führungs- und Einpassumriss (12) verläuft, und wobei die Differenz (X) zwischen den Radien des dritten Kreises und desjenigen Kreises, der intern tangential zu dem Führungs- und Einpassumriss verläuft, größer ist als die Differenz (Y) zwischen den Radien des zweiten Kreises und des desjenigen Kreises, der intern tangential zu dem Führungs- und Einpassumriss verläuft.

7. Anordnung nach einem der vorhergehenden Ansprüche, aufweisend Arretiermittel der Verbindungsbasis (2) in dem Rahmen (1) in der zweiten Konfiguration.

8. Die Anordnung nach Anspruch 7, wobei die Arretiermittel ein elastisches Bein (B2) in dem ersten Abschnitt (23) des Verbindungskorpus und Kerben (B1) in dem Führungs- und Einpassumriss (12) aufweisen zum Einpassen der Enden des elastischen Beins (B2).

9. Die Anordnung nach einem der vorhergehenden Ansprüche, wobei der Rahmen (1) eine Gehäuseaussparung (13) der Rahmenstruktur (21) der Verbindungsbasis (2) besitzt.

10. Die Anordnung nach einem der vorhergehenden Ansprüche, wobei der Rahmen (1) quadratisch oder rechtwinklig ist und der zweite Abschnitt (24) ein Korpus ist mit einem länglichen Querschnitt, und wobei seine größere Seite schiefliegend in Bezug auf die Seiten des Rahmens (1) in der zweiten Konfiguration angeordnet ist.

11. Die Anordnung nach Anspruch 3, wobei das Führungsmittel eine Winkelfrequenz von 90° besitzt, derart, dass vier Winkelpositionen relativ zu der Kupplung zwischen dem Rahmen (1) und der Verbindungsbasis (2) festgelegt sind.

12. Die Anordnung nach einem der vorhergehenden Ansprüche, wobei der erste Abschnitt (23) einen Hohlraum (25) aufweist zum Aufnehmen des Korpus eines männlichen Steckers.

13. Die Anordnung nach einem der vorhergehenden Ansprüche, wobei der Rahmen (1) eine Vielzahl von Öffnungen (11) und der entsprechenden Verbindungsbasen (2) aufweist.

14. Die Anordnung nach einem der vorhergehenden Ansprüche, wobei der zweite Abschnitt (24) eine Vielzahl von Schnellkupplungshebeln (P) aufweist.

15. Kupplungsverfahren für eine Anordnung nach Anspruch 3, das sequenziell die Phasen aufweist:
a) Einführen des zweiten Abschnitts (24) der Verbindungsbasis in die Öffnung (11), wodurch die Anordnung von der ersten Konfiguration in die dritte Konfiguration gebracht wird;
b) Drehen der Verbindungsbasis (2) in Bezug auf den Rahmen (1) in eine Position, in der das Führungsmittel der äußeren Oberfläche (S23) der Verbindungsbasis und der Führungs- und Einpassumriss (12) übereinstimmen;
c) relatives Verschieben der Verbindungsbasis (2) und des Rahmens (1), um die Anordnung in die zweite Konfiguration zu bringen;
d) Arretieren der Anordnung in der zweiten Konfiguration.

## Revendications

1. Ensemble bâti (1) et base de connexion (2) pour mécanismes à encastrer, dans lequel le bâti (1) comprend au moins une ouverture (11) pour l'introduction et le montage de la base de connexion (2), l'ouverture (11) étant délimitée par un périmètre du bâti (1) pour guider et monter la base de connexion (2), dans lequel la base de connexion (2) comprend un corps de connexion (22), une première configuration étant définie, dans laquelle le bâti (1) et la base de connexion (2) ne sont pas couplés et une deuxième configuration dans laquelle le bâti (1) et la base de connexion (2) sont couplés, de sorte que dans la deuxième configuration, le corps de connexion (22) est introduit dans l'ouverture (11), le contour du corps de connexion (22) au niveau de l'une de ses extrémités étant en contact avec le périmètre de guidage et de montage (12), le reste du corps de connexion (22) faisant saillie par son autre extrémité de l'autre côté du bâti (1), et dans lequel le corps de connexion (22) a deux parties, une première partie (23) qui est dans la deuxième configuration, est fixée au périmètre de guidage et de montage (12) par l'une de ses extrémités et une seconde partie (24) assemblée à la première partie (23), à la fois les première (23) et seconde (24) parties étant de sections différentes de sorte que dans la transition entre ces deux, on définit des surfaces de palier (S2), **caractérisé en ce que** dans une troisième configuration, ces surfaces de palier (S2) s'appuient sur le bord du bâti adjacent au périmètre de guidage et de montage (12), le contour de la seconde partie (24) dans le changement de section entre les première (23) et seconde (24) parties étant inscrit dans un premier cercle (3) qui est intérieurement tangent par rapport au périmètre de guidage et de montage (12), de sorte que dans la troisième configuration, la base de connexion (2) peut tourner par rapport au bâti (1) selon une rotation qui a la direction normale par rapport au plan du bâti (1).

2. Ensemble selon la revendication 1, dans lequel la base de connexion (2) comprend un châssis de support (21) dans le bâti (1) assemblé au corps de connexion (22), de sorte que dans la deuxième configuration, le châssis (21) vient en butée contre le bâti (1) sur un côté de ce dernier, la première partie (23) étant assemblée au châssis (21).

3. Ensemble selon l'une quelconque des revendications précédentes, dans lequel la première partie (23) du corps de connexion (22) a une surface externe (S23), cette surface externe (S23) et le périmètre de guidage et de montage (12) étant prévus avec des moyens de guidage entre eux selon une direction de couplage qui est perpendiculaire au plan du bâti (1).

4. Ensemble selon la revendication 3, dans lequel la surface externe (S23) de la première partie du corps de connexion comprend des crêtes (231) qui ont la direction de couplage, le périmètre de guidage et de montage (12) étant prévu avec des encoches (111) complémentaires par rapport aux crêtes.

5. Ensemble selon l'une quelconque des revendications précédentes, dans lequel la seconde partie (24) du corps de connexion est prévue avec des bornes de connexion (T) pour la connexion de certains câbles.

6. Ensemble selon l'une quelconque des revendications précédentes, dans lequel le contour de la seconde partie (24) du corps de connexion dans le changement de section entre les première (23) et seconde (24) parties du corps de connexion comprend au moins deux points agencés dans un deuxième cercle avec un rayon inférieur au cercle (3) intérieurement tangent par rapport au périmètre de guidage et de montage (12), le contour de la première partie (23) du corps de connexion étant tangent par rapport à un troisième cercle avec un rayon supérieur au cercle (3) intérieurement tangent au périmètre de guidage et de montage (12), la différence (X) entre les rayons du troisième cercle et le cercle intérieurement tangent au périmètre de guidage et de montage étant supérieure à la différence (Y) entre les rayons du deuxième cercle et le cercle intérieurement tangent au périmètre de guidage et de montage.

7. Ensemble selon l'une quelconque des revendications précédentes, comprenant des moyens de verrouillage de la base de connexion (2) dans le bâti (1) dans la deuxième configuration.

8. Ensemble selon la revendication 7, dans lequel les moyens de verrouillage comprennent des pattes élastiques (B2) dans la première partie (23) du corps de connexion et des encoches (B1) dans le périmètre de guidage et de montage (12) pour le montage des extrémités des pattes élastiques (B2).

9. Ensemble selon l'une quelconque des revendications précédentes, dans lequel le bâti (1) a un évidement de logement (13) du châssis (21) de la base de connexion (2).

10. Ensemble selon l'une quelconque des revendications précédentes, dans lequel le bâti (1) est carré ou rectangulaire et la seconde partie (24) est un corps avec une section transversale oblongue, son plus grand côté étant agencé de manière oblique par rapport aux côtés du châssis (1) dans la deuxième configuration.

11. Ensemble selon la revendication 3, dans lequel les moyens de guidage ont une fréquence angulaire de 90°, de sorte que quatre positions angulaires sont définies par rapport au couplage entre le bâti (1) et la base de connexion (2).

12. Ensemble selon l'une quelconque des revendications précédentes, dans lequel la première partie (23) comprend une cavité (25) pour recevoir le corps d'une prise mâle.

13. Ensemble selon l'une quelconque des revendications précédentes, dans lequel le bâti (1) comprend une pluralité d'ouvertures (11) et les bases de connexion (2) correspondantes.

14. Ensemble selon l'une quelconque des revendications précédentes, dans lequel la seconde partie (24) comprend une pluralité de leviers à connexion rapide (P).

15. Procédé de couplage pour un ensemble selon la revendication 3, comprenant de manière séquentielle les étapes suivantes :
a) introduite la seconde partie (24) de la base de connexion dans l'ouverture (11), ce qui fait passer l'ensemble, de la première configuration à la troisième configuration ;
b) faire tourner la base de connexion (2) par rapport au bâti (1) jusqu'à une position dans laquelle les moyens de guidage de la surface externe (S23) de la base de connexion et du périmètre de guidage et de montage (12) coïncident ;
c) le coulissement relatif entre la base de connexion (2) et le bâti (1) pour faire passer l'ensemble dans la deuxième configuration,
d) verrouiller l'ensemble dans la deuxième configuration.
